# EUROPEAN PATENT APPLICATION

(11) **EP 4 510 229 A1**
(43) Date of publication of application: **19.02.2025**
(21) Application number: 23907337.2
(22) Date of filing: 13.10.2023
(51) Int. Cl.: H01M 4/505, H01M 4/525, H01M 10/052, H01M 10/44

(54) **LITHIUM SECONDARY BATTERY COMPRISING LITHIUM-RICH MANGANESE-BASED OXIDE, AND MANUFACTURING METHOD THEREFOR**

(30) Priority: 23.12.2022 KR 20220183648
(71) Applicant: LG Energy Solution, Ltd., Seoul 07335 (KR)
(72) Inventor: CHOI, Dongin, Daejeon 34122 (KR); SUNG, Kiwon, Daejeon 34122 (KR)
(74) Representative: Plasseraud IP
(86) International application number: PCT/KR2023/015796
(87) International publication number: WO 2024/136051

(57) **Abstract**

The present invention relates to a lithium secondary battery comprising: a positive electrode, a negative electrode, a separator and an electrolyte, with the positive electrode including lithium-rich manganese-based oxide in which the content of manganese in all metals excluding lithium is greater than 50 mol%, and the ratio of the number of moles of lithium to the number of moles of all metals excluding lithium (Li/Me) is greater than 1, wherein when the total discharge curve area is defined as 100% in a dQ/dV graph which is obtained by differentiating a graph of a voltage V and a battery discharge capacity Q measured while charging the lithium secondary battery to 4.6V at 0.1C and then discharging it to 2.0V at 0.1C, the discharge curve area in a voltage range of 2.0 to 3.5V is 35% or less, and a method for manufacturing the same.

## Description

### [TECHNICAL FIELD]

### Cross Citation with Related Application(s)

This application claims the benefit of Korean Patent Application No. 10-2022-0183648 filed on December 23, 2022 with the Korean Intellectual Property Office, the disclosure of which is incorporated herein by reference in its entirety.

The present invention relates to a lithium secondary battery comprising lithium-rich manganese-based oxide and a method for manufacturing the same, and more particularly, to a lithium secondary battery comprising lithium-rich manganese-based oxide having improved resistance characteristics, especially positive electrode resistance characteristics, and a method for manufacturing the same.

### [BACKGROUND]

Lithium secondary batteries are energy storage media that have been applied in various fields since they were commercially introduced in 1991. As the market for products equipped with lithium secondary batteries expands, research to increase the energy density of lithium secondary batteries has been actively conducted. One of the methods that is attracting the most attention is developing a positive electrode active material with a composition that can utilize a larger amount of lithium than before.

As a positive electrode active material that can utilize a larger amount of lithium, lithium-rich transition metal oxide having a layered structure and having a molar ratio of lithium to transition metal of greater than 1 have been developed. Such a lithium-rich transition metal oxide can achieve high capacity by performing the activation step at a high voltage of 4.4V or more. However, when such a high-voltage activation step is performed, oxygen desorption and cation mixing are induced in the crystal structure of the lithium-rich transition metal oxide, which causes a problem that the resistance of the positive electrode is significantly increased.

### [DETAILED DESCRIPTION OF THE INVENTION]

### [Technical Problem]

The present invention has been made to solve the above problems, and it is therefore an object of the present invention to provide a lithium secondary battery comprising lithium-rich manganese-based oxide having improved resistance characteristics, especially positive electrode resistance characteristics, and a method for manufacturing the same.

### [Technical Solution]

According to one aspect of the present invention, there is provided a lithium secondary battery comprising: a positive electrode, a negative electrode, a separator and an electrolyte, with the positive electrode including lithium-rich manganese-based oxide in which the content of manganese in all metals excluding lithium is greater than 50 mol%, and the ratio of the number of moles of lithium to the number of moles of all metals excluding lithium (Li/Me) is greater than 1, wherein when the total discharge curve area is defined as 100% in a dQ/dV graph which is obtained by differentiating a graph of a voltage V and a battery discharge capacity Q measured while charging the lithium secondary battery to 4.6V at 0.1C and then discharging it to 2.0V at 0.1C, the discharge curve area in a voltage range of 2.0 to 3.5V is 35% or less, preferably 20% to 35%.

The lithium-rich manganese-based oxide may be represented by the following Chemical Formula 1.

[Chemical Formula 1] LiₐNi_{b}Co_{c}Mn_{d}MₑO₂

wherein, in Chemical Formula 1, M includes at least one selected from the group consisting of Al, B, Co, W, Mg, V, Ti, Zn, Ga, In, Ru, Nb, Sn, Sr and Zr, 1 < a, 0≤b≤0.5, 0≤c≤0.1, 0.5≤d<1.0, and 0≤e≤0.2. Preferably, 1.1≤a≤1.5, 0.1≤b≤0.4, 0≤c≤0.05, 0.5≤d≤0.80, and 0≤e≤0.1.

According to another aspect of the present invention, there is provided a method for manufacturing a lithium secondary battery, the method comprising the steps of: preparing a battery cell including a positive electrode, a negative electrode and an electrolyte, with the positive electrode including lithium-rich manganese-based oxide in which the content of manganese in all metals excluding lithium is greater than 50 mol%, and the ratio of the number of moles of lithium to the number of moles of all metals excluding lithium (Li/Me) is greater than 1; and charging and discharging the battery cell at least once to activate the battery cell, wherein the activating step comprises a first charging step of charging the battery cell at a C-rate of less than 0.5C, and a second charging step of charging the battery cell at a C-rate of 0.5C or more.

Preferably, the first charging step may be performed until the SOC of the battery cell reaches 10 to 40, and the second charging step may be performed until the SOC of the battery cell reaches 90 to 150 after the first charging step.

The first charging step and the second charging step may be performed in constant current mode (CC mode), or alternatively, the first charging step may be performed in constant current mode (CC mode), and the second charging step may be performed in constant current-constant voltage mode (CCCV mode).

The charge termination voltage in the second charging step may be 4.4V or more, for example, 4.4V to 4.8V, or 4.5V to 4.8V.

Preferably, in the present invention, the charging and discharging in the activating step may be performed in a voltage range of 2.0V to 4.6V.

In the lithium secondary battery manufactured through the activating step as above, when the total discharge curve area is defined as 100% in a dQ/dV graph which is obtained by differentiating a graph of a voltage V and a battery discharge capacity Q measured while charging the lithium secondary battery to 4.6V at 0.1C and then discharging it to 2.0V at 0.1C, the discharge curve area in a voltage range of 2.0 to 3.5V may be 35% or less, preferably 20% to 35%.

### [Advantageous Effects]

A lithium secondary battery according to the present invention includes lithium-rich manganese-based oxide in which the content of manganese in all metals excluding lithium is greater than 50 mol%, and the ratio of the number of moles of lithium to the number of moles of all metals excluding lithium (Li/Me) is greater than 1. The lithium-rich manganese-based oxide can be driven at a relatively higher voltage than lithium nickel-based oxide and thus, has excellent capacity characteristics.

Also, in the lithium secondary battery according to the present invention, oxygen desorption and cation mixing are suppressed during the activation process, and there is little exhibition of capacity appearing during reduction of Mn ions mixed with cations, whereby when the total discharge curve area in the dQ/dV graph is defined as 100%, the discharge curve area in the voltage range of 2.0 to 3.5 V appears to be as small as 35% or less, preferably 20% to 35%. The lithium secondary battery of the present invention having the above-mentioned discharge behavior has a small increase in positive electrode resistance during charging and discharging, and thus, has excellent resistance characteristics and output characteristics.

The method for manufacturing a lithium secondary battery according to the present invention performs charging at a high C-rate of 0.5C or more in some sections of the activation charging step, and thus, reduces the activation of the Li₂MnO₃ (monoclinic) phase within the crystal structure of the positive electrode active material, which makes it possible to lower cell and positive electrode resistance.

In addition, since the manufacturing method according to the present invention includes a second charging step of charging at a higher C-rate than a conventional one, the total time required for the activation step is shortened, by which the effect of improving production speed of a lithium secondary battery can be obtained.

Further, the manufacturing method according to the present invention performs a first charging step of charging at a low C rate at the initial step of activation, thus ensuring that the SEI film is sufficiently formed on the electrode at the initial step of activation. If charging is performed at a high C-rate at the initial step of activation, this is because the SEI film is formed unstable on the electrode, which may lead a decrease in battery life characteristics.

### [BRIEF DESCRIPTION OF THE DRAWINGS]

FIG. 1 is a dQ/dV graph of the lithium secondary batteries manufactured in Examples 1 to 3 and Comparative Example 1.
FIG. 2 is a graph showing the positive electrode resistance of the lithium secondary batteries manufactured by Examples 1 to 3 and Comparative Example 1, as measured by EIS analysis.
FIG. 3 is a graph showing the positive electrode resistance of the lithium secondary batteries manufactured by Examples 1 to 3 and Comparative Example 1, as measured by DCIR analysis.

### [DETAILED DESCRIPTION OF THE EMBODIMENTS]

Terms or words used in the specification and the appended claims should not be construed as limited to ordinary or dictionary meanings, and the present invention should be construed with meanings and concepts that are consistent with the technical idea of the present invention based on the principle that the inventors may appropriately define concepts of the terms to appropriately describe their own invention in the best way.

In the present invention, 'primary particle' refers to a particle unit in which grain boundaries do not appear to exist when observed with the field of view of 5000 to 20000 magnification using a scanning electron microscope. "Average particle size of primary particles" refers to the arithmetic average value of primary particles observed in a scanning electron microscope image calculated after measuring their particle sizes.

In the present invention, 'secondary particle' is a particle formed by agglomerating a plurality of primary particles.

In the present invention, the average particle size D₅₀ means a particle size at which cumulative volumes of powder particles (e.g., positive electrode active material, negative electrode active material, etc.) reach 50% in the particle size distribution curve of the particles. The D₅₀ can be measured using a laser diffraction method. It can be measured by a process which includes dispersing the powder of particles to be measured in a dispersion medium, introducing it into a commercially available laser diffraction particle size measurement device (e.g., Microtrac MT 3000), irradiating it with ultrasound of about 28 kHz with the output power of 60W to obtain a volume cumulative particle size distribution, and determining the particle size corresponding to 50% of cumulative volume.

In the present invention, "SOC X" refers to a state where the percentage of the capacity charged in the battery cell relative to the discharge capacity appearing when the battery cell is discharged from 4.6 V to 2.0 V is X.

The present inventors have conducted repeated research to improve the resistance and output characteristics of a lithium secondary battery using lithium-rich manganese-based oxide, and as a result, found that an activating step is performed under specific charging conditions when manufacturing a lithium secondary battery, thereby capable of minimizing cation mixing and oxygen desorption and improving positive electrode and cell resistance characteristics, and completed the present invention.

The present invention will be described in detail below.

### <Lithium secondary battery>

A lithium secondary battery according to the present invention comprises a positive electrode, a negative electrode, and an electrolyte, with the positive electrode including lithium-rich manganese-based oxide in which the content of manganese in all metals excluding lithium is greater than 50 mol%, and the ratio of the number of moles of lithium to the number of moles of all metals excluding lithium (Li/Me) is greater than 1.

In the lithium secondary battery according to the present invention, when the total discharge curve area is defined as 100% in a dQ/dV graph which is obtained by differentiating a graph of a voltage V and a battery discharge capacity Q measured while charging the battery to 4.6V at 0.1C and then discharging it to 2.0V at 0.1C, the discharge curve area in a voltage range of 2.0 to 3.5V is 35% or less, preferably 20% to 35%.

The peak that appears at 3.5V or less when discharging a lithium secondary battery is known to be a peak that appears due to the oxygen redox reaction and the redox reaction of Mn ions mixed with cations. In other words, it means that the larger the discharge curve area that appears at 3.5V or less, the more the oxygen redox reaction and cation mixing increase. On the other hand, when oxygen redox reaction and cation mixing increase, positive electrode resistance increases significantly and output characteristics deteriorate. Therefore, in the present invention, the activation conditions during the manufacturing of the lithium secondary battery are adjusted so that the discharge curve area appearing in the 2.0V to 3.5V voltage range in the dQ/dV graph is 35% or less of the total discharge curve area, which makes it possible to suppress an increase in positive electrode resistance due to mixing of cations. When the discharge curve area appearing in the 2.0V to 3.5V voltage range in the dQ/dV graph satisfies 35% or less of the total discharge curve area, the resistance of the positive electrode and cell is reduced, and excellent output characteristics can be achieved. However, if the discharge curve area in a voltage range of 2.0V to 3.5V is too small, the capacity characteristics may deteriorate. Therefore, it is more preferable that the discharge curve area appearing in a voltage range of 2.0V to 3.5V in the dQ/dV graph is about 20% to 35% of the total discharge curve area.

Each component of the lithium secondary battery according to the present invention will be described in more detail below.

### Positive electrode

The positive electrode according to the present invention includes lithium-rich manganese-based oxide in which the content of manganese in all metals excluding lithium is greater than 50 mol%, and the ratio of the number of moles of lithium to the number of moles of all metals excluding lithium (Li/Me) is greater than 1. Specifically, the positive electrode according to the present invention includes a positive electrode current collector, and a positive electrode active material layer formed on at least one surface of the positive electrode current collector, wherein the positive electrode active material layer includes a lithium-rich manganese-based oxide in which the ratio of the number of moles of lithium to the number of moles of all metals excluding lithium (Li/Me) is greater than 1.

In the case of lithium-rich manganese-based oxide containing surplus lithium, it has a structure in which layered phase (LiM'O₂) and rock-salt phase (Li₂MnO₃) are mixed. During the initial activation process, the rock-salt phase is activated and excessive lithium ions are generated, thereby achieving high capacity.

Preferably, the lithium-rich manganese-based oxide may be represented by the following Chemical Formula 1.

[Chemical Formula 1] LiₐNi_{b}Co_{c}Mn_{d}MₑO₂

wherein, in Chemical Formula 1, M may be at least one selected from the group consisting of Al, B, Co, W, Mg, V, Ti, Zn, Ga, In, Ru, Nb, Sn, Sr and Zr.

On the other hand, a is the molar ratio of Li in the lithium-rich manganese-based oxide, and may be 1<a, 1.1≤a≤1.5, or 1.1≤a≤1.3. If a is within the above range, the irreversible capacity of the silicon-based negative active material can be sufficiently compensated, and high capacity characteristics can be realized.

The b is the molar ratio of Ni in the lithium-rich manganese-based oxide, and may be 0≤b≤0.5, 0.1≤b≤0.4, or 0.2≤b≤0.4.

The c is the molar ratio of Co in the lithium-rich manganese-based oxide, and may be 0 ≤ c ≤ 0.1, 0 ≤ c ≤ 0.08, or 0 ≤ c ≤ 0.05. If c exceeds 0.1, it is difficult to secure high capacity, and gas generation and deterioration of the positive electrode active material become intensified, and the life characteristics may deteriorate.

The d is the molar ratio of Mn in the lithium-rich manganese-based oxide, and may be 0.5 ≤ d<1.0, 0.50 ≤ d ≤ 0.80, or 0.50 ≤ d ≤ 0.70. If d is less than 0.5, the proportion of the rock-salt phase becomes too small, so the effects of negative electrode irreversibility compensation and capacity improvement are slight.

The e is the molar ratio of the doping element M in the lithium-rich manganese-based oxide, and may be 0 ≤ e ≤ 0.2, 0 ≤ e ≤ 0.1, or 0 ≤ e ≤ 0.05. If the content of the doping element is too high, it may have an adverse effect on the capacity of the active material.

On the other hand, in the lithium-rich manganese-based oxide represented by [Chemical Formula 1], the ratio of the number of moles of Li to the number of moles of all metal elements excluding Li (Li/Me) may be 1.2 to 1.5, 1.25 to 1.5, or 1.25 to 1.4. When the Li/Me ratio satisfies the above range, rate characteristics and capacity characteristics can excellently exhibit. If the Li/Me ratio is too high, electrical conductivity may decrease and the rock-salt phase (Li₂MnO₃) may increase, which may increase the degradation rate. If the Li/Me ratio is too low, the effect of improving energy density is slight.

On the other hand, the composition of the lithium- rich manganese-based oxide may be represented by the following [Chemical Formula 2].

[Chemical Formula 2] X Li₂MnO₃·(1-X)Li[Ni_{1-y-z-w}Mn_{y}Co_{z}M_{w}]O₂

wherein, in [Chemical Formula 2], M may be at least one metal ion selected from the group consisting of Al, B, Co, W, Mg, V, Ti, Zn, Ga, In, Ru, Nb, Sn, Sr, and Zr.

The X refers to the ratio of the Li₂MnO₃ phase in the lithium-rich manganese-based oxide, and may be 0.2≤X≤0.5, 0.25≤X≤0.5, or 0.25≤X≤0.4. When the ratio of the Li₂MnO₃ phase in the lithium-rich manganese-based oxide satisfies the above range, the irreversible capacity of the silicon-based negative electrode active material can be sufficiently compensated, and high capacity characteristics can be realized.

The y is the molar ratio of Mn in the LiM'O₂ phase, and may be 0.4≤y<1, 0.4≤y≤0.8, or 0.4≤y≤0.7.

The z is the molar ratio of Co in the LiM'O₂ phase, and may be 0≤z≤0.1, 0≤z≤0.08, or 0≤z≤0.05. If z is greater than 0.1, gas generation and deterioration of the positive electrode active material may become intensified, and the life characteristics may deteriorate.

The w is the molar ratio of the doping element M in the LiM'O₂ phase, and may be 0≤w≤0.2, 0≤w≤0.1, or 0≤w≤0.05.

On the other hand, the positive electrode active material according to the present invention may further include a coating layer on the surface of the lithium-rich manganese-based oxide, if necessary. When the positive electrode active material includes a coating layer, contact between the lithium-rich manganese-based oxide and the electrolyte is suppressed by the coating layer, and side reactions of the electrolyte are reduced, thereby capable of obtaining the effect of improving the life characteristics

The coating layer may include a coating element M¹, and the coating element M¹ may be, for example, at least one selected from the group consisting of Al, B, Co, W, Mg, V, Ti, Zn, Ga, In, Ru, Nb, Sn, Sr, and Zr, preferably, Al, Co, Nb, W, and a combination thereof, and more preferably, Al, Co, and a combination thereof. The coating element M¹ may include two or more types, for example, Al and Co.

The coating element may be present in the coating layer, in oxide form, i.e., M¹Oz (1≤z≤4).

The coating layer can be formed through methods such as dry coating, wet coating, chemical vapor deposition (CVD), physical vapor deposition (PVD), and atomic layer deposition (ALD). Among these, it is preferable to form it through atomic layer deposition in that the coating layer can be formed to have a wider area.

The formation area of the coating layer may be 10 to 100%, preferably 30 to 100%, and more preferably 50 to 100%, based on the total surface area of the lithium-rich manganese-based oxide particles When the formation area of the coating layer satisfies the above range, the effect of improving life characteristics is excellent.

On the other hand, the positive electrode active material according to the present invention may be in the form of secondary particles in which a plurality of primary particles are agglomerated, and the average particle size D₅₀ of the secondary particles may be 2 *µ*m to 10 *µ*m, preferably 2 *µ*m to 8 *µ*m, and more preferably 4 *µ*m to 8 *µ*m. When the D₅₀ of the positive electrode active material satisfies the above range, the electrode density can be excellently achieved, and degradation of capacity and rate characteristics can be minimized.

Further, the positive electrode active material may have a BET specific surface area of 1m²/g ~ 10m²/g, 3 ~ 8m²/g or 4 ~ 6m²/g. If the BET specific surface area of the positive electrode active material is too low, the reaction area with the electrolyte is insufficient, which makes it difficult to achieve sufficient capacity. If the specific surface area is too high, moisture absorption is rapid and side reactions with electrolytes are accelerated, which makes it difficult to secure life characteristics.

On the other hand, the lithium-rich manganese-based oxide can be produced by mixing a transition metal precursor and a lithium raw material and then firing the mixture.

As the lithium raw material, for example, lithium-containing carbonates (e.g., lithium carbonate, etc.), hydrates (e.g., lithium hydroxide hydrate (LiOH·H₂O), etc.), hydroxides (e.g., lithium hydroxide, etc.), nitrates (e.g., lithium nitrate (LiNO₃), etc.), chlorides (e.g., lithium chloride (LiCl), etc.), and the like can be used, and among these, one type alone or a mixture of two or more types can be used.

On the other hand, the transition metal precursor may be in the form of hydroxides, oxides, or carbonates. When the carbonate form of the precursor is used, it is more preferable in that a positive electrode active material with a relatively high specific surface area can be produced.

The transition metal precursor can be prepared by a co-precipitation process. For example, the transition metal precursor can be prepared by dissolving each transition metal-containing raw material in a solvent to prepare a metal solution, then mixing the metal solution, an ammonium cation complex forming agent, and a basic compound, and proceeding with a coprecipitation reaction. Further, if necessary, an oxidizing agent or oxygen gas may be further added during the coprecipitation reaction.

At this time, the transition metal-containing raw material may be acetate, carbonate, nitrate, sulfate, halide, sulfide, and the like of each transition metal. Specifically, the transition metal-containing raw material may be NiO, NiCO₃·2Ni(OH)₂·4H₂O, NiC₂O₂·2H₂O, Ni(NO₃)₂·6H₂O, NiSO₄, NiSO₄·6H₂O, Mn₂O₃, MnO₂, Mn₃O₄ MnCO₃, Mn(NO₃)₂, MnSO₄ ·H₂O, manganese acetate, manganese halide, cobalt oxide, cobalt carbonate, cobalt acetate, cobalt halide, and the like.

The ammonium cation complex forming agent may be at least one selected from the group consisting of NH₄OH, (NH₄)₂SO₄, NH₄NO₃, NH₄Cl, CH₃COONH₄, and NH₄CO₃.

The basic compound may be at least one selected from the group consisting of NaOH, Na₂CO₃, KOH, and Ca(OH)₂. The form of the precursor may vary depending on the type of the basic compound used. For example, when NaOH is used as a basic compound, a hydroxide form of the precursor can be obtained, and when Na₂CO₃ is used as a basic compound, a carbonate form of the precursor can be obtained. Further, when a basic compound and an oxidizing agent are used together, an oxide form of the precursor can be obtained.

On the other hand, the transition metal precursor and the lithium raw material can be mixed in an amount such that the molar ratio of total transition metals (Ni+Co+Mn):Li is 1: 1.05 to 1:2, preferably 1:1.1 to 1:1.8, and more preferably 1: 1.25 to 1:1.8.

On the other hand, the firing may be performed at a temperature of 600°C to 1000°C or 700°C to 950°C, and the firing time may be 5 hours to 30 hours or 5 hours to 20 hours. Further, the firing atmosphere may be an air atmosphere or an oxygen atmosphere, for example, an atmosphere containing oxygen at 20 to 100% by volume.

On the other hand, the positive electrode active material layer may further include a conductive material and a binder in addition to the positive electrode active material.

Examples of the conductive material include spherical or flaky graphite; carbon-based material such as carbon black, acetylene black, ketjen black, channel black, furnace black, lamp black, thermal black, carbon fiber, single-wall carbon nanotubes, and multi-wall carbon nanotubes; metal powders or metal fibers such as copper, nickel, aluminum, and silver; conductive whiskers such as zinc oxide and potassium titanate; conductive metal oxides such as titanium oxide; or conductive polymers such as polyphenylene derivatives, and the like. Among these, one type alone or a mixture of two or more types can be used. The conductive material can be contained in an amount of 0.1 to 20% by weight, 1 to 20% by weight, or 1 to 10% by weight based on the total weight of the positive electrode active material layer.

Further, the binder may include polyvinylidenefluoride(PVDF), a vinylidenefluoridehexafluoropropylene copolymer(PVdF-co-HFP), polyvinyl alcohol, polyacrylonitrile, carboxymethylcellulose(CMC), starch, hydroxypropylcellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber(SBR), fluorine rubber, and various copolymers thereof. Among these, one type alone or a mixture of two or more types can be used. The binder may be contained in an amount of 1 to 20% by weight, 2 to 20% by weight, or 2 to 10% by weight based on the total weight of the positive electrode active material layer.

### Negative electrode

The negative electrode may include, for example, a negative electrode current collector and a negative electrode active material layer located on the negative electrode current collector. The negative electrode active material layer may optionally include a binder and a conductive material along with the negative electrode active material.

The negative electrode current collector is not particularly limited as long as it has high conductivity without causing a chemical change in the battery, and, for example, copper, stainless steel, aluminum, nickel, titanium, fired carbon, or copper or stainless steel of which surface is treated with carbon, nickel, titanium, silver, or the like, an aluminum-cadmium alloy, or the like can be used. Further, the negative electrode current collector may generally have a thickness of 3 *µ*m to 500 *µ*m. Also, similar to the positive electrode current collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

As the negative electrode active material, a compound capable of reversible intercalation and deintercalation of lithium can be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as SiO_{β} (0< β < 2), SnO₂, vanadium oxide, and lithium vanadium oxide; a composite containing the metallic compound and the carbonaceous material, such as Si-C composite or Sn-C composite, and any one alone or a mixture of two or more thereof can be used.

Further, a metallic lithium thin film may be used as the negative electrode active material. Further, both low-crystalline carbon and highly-crystalline carbon can be used as the carbon material. Typical examples of the low-crystalline carbon include soft carbon and hard carbon. Typical examples of the highly-crystalline carbon include amorphous, plate-like, flaky, spherical or fibrous natural graphite or artificial graphite, kish graphite, pyrolytic carbon, mesophase pitch-based carbon fiber, meso-carbon microbeads, high-temperature sintered carbon such as mesophase pitches and petroleum or coal tar pitch derived cokes.

The conductive material is used to impart conductivity to the electrode, and the conductive material can be used without particular limitation as long as it has electronic conductivity without causing chemical changes in the battery to be configured. Specific examples thereof include graphite such as natural graphite and artificial graphite; carbon-based materials such as carbon black, acetylene black, ketjen black, channel black, furnace black, lamp black, thermal black, carbon fiber, and carbon nanotube; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and any one type alone or a mixture of two or more types of them can be used. The conductive material may typically be contained in an amount of 1 to 30% by weight, preferably 1 to 20% by weight, and more preferably 1 to 10% by weight, based on the total weight of the negative electrode active material layer.

The binder performs the role of improving adhesion between negative electrode active material particles and an adhesive force between the negative electrode active material and the negative electrode current collector. Specific examples thereof include polyvinylidene fluoride (PVDF), a vinylidene fluoride-co-hexafluoropropylene copolymer(PVDF-co-HFP), polyvinyl alcohol, polyacrylonitrile, carboxymethyl cellulose(CMC), starch, hydroxypropylcellulose, regenerated cellulose, polyvinyl pyrrolidone, polytetrafluoroethylene, polyethylene, polypropylene, an ethylene-propylene-diene monomer(EPDM), a sulfonated EPDM, styrene butadiene rubber(SBR), fluoro rubber, or various copolymers thereof, and any one type alone or a mixture of two or more types of them can be used. The binder may be contained in an amount of 1 to 30% by weight, preferably 1 to 20% by weight, and more preferably 1 to 10% by weight, based on the total weight of the negative electrode active material layer.

The negative electrode active material layer may be prepared by coating a negative electrode slurry containing a negative electrode active material and optionally a binder and a conductive material onto a negative electrode current collector, and drying the coated slurry, or may be prepared by casting the negative electrode slurry on a separate support and then laminating a film peeled from the support on the current collector.

### Separator

The lithium secondary battery according to the present invention may further include a separator interposed between the positive electrode and the negative electrode. The separator separates the negative electrode and the positive electrode from each other, and provides a moving passage for lithium ions. The separator can be used without particular limitation as long as it is used as a separator in a typical lithium secondary battery. Particularly, it is preferable that the separator has a low resistance against the ion migration of the electrolyte and has an excellent ability to impregnate the electrolyte. Specifically, the separator may be a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, or a laminated structure of two or more layers thereof. Further, a typical porous nonwoven fabric, for example, a nonwoven fabric made of a glass fiber having a high melting point, a polyethylene terephthalate fiber or the like can be used. In addition, in order to secure heat resistance or mechanical strength, a coated separator containing a ceramic ingredient or a polymer material can be used, and may be optionally used as a single layer or multilayer structure.

### Electrolyte

The electrolyte used herein may include various electrolytes that can be used in lithium secondary batteries, such as an organic liquid electrolyte, an inorganic liquid electrolyte, a solid polymer electrolyte, a gel-type polymer electrolyte, a solid inorganic electrolyte, a melt-type inorganic electrolyte, or a combination thereof, and the type thereof is not particularly limited.

For example, the electrolyte may include an organic solvent and a lithium salt.

The organic solvent can be used without any particular limitation as long as it serves as a medium through which ions involved in the electrochemical reaction of the battery may migrate. Specific examples of the organic solvent may include an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate(DMC), diethyl carbonate(DEC), methylethylcarbonate (MEC), ethylmethyl carbonate(EMC), ethylene carbonate(EC), or propylene carbonate(PC); an alcohol-based solvent such as ethyl alcohol or isopropyl alcohol; nitriles such as R-CN (wherein R is a linear, branched or cyclic hydrocarbon group having 2 to 20 carbon atoms, and may include a double bond aromatic ring or ether bond); amides such as dimethylformamide; dioxolanes such as 1,3-dioxolane; sulfolane; or the like.

The lithium salt can be used without any particular limitation as long as it is a compound capable of providing lithium ions used in the lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the lithium salt that can be used herein may be LiPF₆, LiN(FSO₂)₂, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂ or the like. The concentration of the lithium salt may be preferably used within the range of 0.1 to 5.0M.

In order to improve the life characteristics of the battery, suppress the decrease of the battery capacity, improve the discharging capacity of the battery, etc., in addition to the above electrolyte ingredients, the electrolyte may further include an additive. For example, as the additive, a haloalkylene carbonate-based compound such as difluoroethylene carbonate; pyridine; triethylphosphite; triethanolamine; cyclic ether; ethylene diamine; n-glyme; hexaphosphoric triamide; nitrobenzene derivatives; sulfur; quinone imine dyes; N-substituted oxazolidinones; N,N-substituted imidazolidine; ethylene glycol dialkyl ether; ammonium salt; pyrrole; 2-methoxy ethanol; aluminum trichloride; or the like can be used alone or in combination, but are not limited thereto. The additive may be contained in an amount of 0.1 to 10% by weight, preferably 0.1 to 5% by weight, based on the total weight of the electrolyte.

### <Method for manufacturing lithium secondary battery>

Next, the method for manufacturing a lithium secondary battery according to the present invention will be described in detail below.

The method for manufacturing a lithium secondary battery according to the present invention comprises (1) a step of preparing a battery-cell including a positive electrode, a negative electrode and a separator, and (2) a step of activating the battery-cell, wherein the activating step comprises a first charging step of charging the battery-cell at a C-rate of less than 0.5C, and a second charging step of charging the battery cell at a C-rate of 0.5C or more.

### (1) Step of preparing battery cell

First, a battery cell including a positive electrode, a negative electrode, and an electrolyte is prepared.

The battery cell can be prepared, for example, by forming an electrode assembly including a positive electrode and a negative electrode, housing the electrode assembly in a battery case, and then injecting an electrolyte to seal a battery case. At this time, the electrode assembly may include a separator between the positive electrode and the negative electrode.

The positive electrode, the negative electrode, the separator and the electrolyte is the same as described above, and thus, a detailed description thereof is omitted.

On the other hand, the electrode assembly may be various forms of electrode assemblies well known in the art, for example, a jelly-roll type, a stacked type, a stacked and laminated type, or a stack and folding type electrode assembly, and the form thereof is not particularly limited.

The jelly-roll type electrode assembly can be produced by interposing a sheet-shaped separator between a sheet-shaped positive electrode and a sheet-shaped negative electrode and then winding it in one direction.

The stacked type electrode assembly can be produced by cutting a positive electrode, a separator and a negative electrode into a desired shape and then sequentially stacking the cut positive electrode/separator/ negative electrode.

The stacked and laminated type electrode assembly can be produced by a method of stacking a positive electrode, a separator and a negative electrode to produce a plurality of unit cells, stacking the plurality of unit cells with a separator interposed therebetween, and then laminating them through a method such as heating.

The stack and folding type electrode assembly can be produced by a method of stacking a positive electrode, a separator and a negative electrode to produce a plurality of unit cells, arranging the plurality of unit cells on one surface or both side surfaces of a folding separator having long length and then winding the folding separator.

On the other hand, as the battery case, various battery cases known in the art, for example, a cylindrical battery case, a prismatic battery case, or a pouch-type battery case, and the like can be used, and the type thereof is not particularly limited.

### (2) Activating step

Next, a step of charging and discharging the battery-cell at least once to electrically activate the battery is performed. The activating step is a step of charging and discharging the battery cell to impart electrical properties and forming a SEI (Solid Electrolyte Interphase) film on the electrodes to stabilize the battery.

In the present invention, the charging of the activation step is performed in two or more steps with different C-rates, thereby forming a robust SEI film on the electrode and at the same time maximally suppressing oxygen desorption and cation mixing during the activation step.

The charging step includes a first charging step of charging the battery cell at a C-rate of less than 0.5C, and a second charging step of charging the battery cell at a C-rate of 0.5C or more.

The first charging step is performed at a C-rate of less than 0.5C, preferably 0.05C or more and less than 0.5C. If the current rate in the first charging step is 0.5C or more, the SEI film may be unstably formed on the electrode surface. If the SEI film is unstably formed on the electrode surface, the SEI film is easily decomposed during battery operation, causing rapid deterioration of the electrode, which can significantly reduce life characteristics.

On the other hand, the first charging step is preferably performed from SOC 0 of the battery cell until the SOC reaches 10 to 40. When the charge capacity in the first charging step satisfies the above range, a robust and dense SEI film is formed on the electrode surface, thereby realizing excellent life characteristics.

On the other hand, the first charging step may be performed in two or more steps with different C-rates, if necessary. For example, the first charging step may include a 1-1 charging step of charging the battery-cell at a C-rate of 0.1C to less than 0.3C, and a 1-2 charging step of charging the battery-cell at a C-rate of less than 0.5C that is higher than the C-rate of the 1-1 charging step. At this time, the 1-1 charging step may be performed from SOC 0 to SOC 3 to 5, and the 1-2 charging step may be performed from SOC 3 to 5 to SOC 10 to 40. When the first charging step is performed in two steps as described above, the current rate at the initial stage of SEI film formation can be kept lower, thereby forming a more robust and dense SEI film.

On the other hand, the first charging step may be performed in performed in constant current mode (CC mode).

Next, the second charging step may be performed in a C-rate of 0.5C or more, preferably 0.5C to 2C. When the second charging step is performed at a C-rate of 0.5C or more, the activation of the Li₂MnO₃ (monoclinic) phase in the crystal structure of the positive electrode active material is reduced, which makes it possible to suppress oxygen desorption and cation mixing from occurring during the activation step. In addition, by performing the second charging step at a relatively fast C-rate, the time required for the activation step is reduced, and the battery production time can be shortened.

On the other hand, the second charging step is preferably performed after the first charging step, that is, until the SOC of the battery cell reaches from 10 to 40 to 90 to 150. When the charging capacity in the second charging step satisfies the above range, it can suppress the incomplete formation of the SEI film, reduce the occurrence of oxygen desorption and cation mixing during the activation step, and minimize the increase of positive electrode resistance.

The second charging step may be performed in constant current mode (CC mode) or constant current-constant voltage mode (CCCV mode).

In the second charging step, the charge termination voltage may be 4.4V or more, for example, 4.4V to 4.8V or 4.5V to 4.7V. When the charge termination voltage of the second charging step satisfies the above range, lithium-rich manganese-based oxide is activated, thereby being able to achieve high capacity characteristics.

Next, the battery-cell charged through the first charging step and the second charging step is discharged. At this time, the discharge may be performed at a C-rate of 0.1C to 1C, preferably 0.3 to 1C. When the discharge rate satisfies the above range, the effect of shortening the activation process time can be obtained.

On the other hand, the discharge may be performed in constant current mode (CC mode).

On the other hand, the discharge termination voltage may be 2.0V to 3.0V.

Preferably, in the present invention, the charging and discharging in the activating step may be performed in a voltage range of 2.0V to 4.6V.

On the other hand, the activation step is preferably performed under temperature conditions of 25°C to 55°C, preferably 30°C to 45°C. When the activation step is performed in the above temperature range, activation can be performed smoothly even at a relatively high C-rate. If the activation temperature is too low, lithium ion mobility may decrease, and activation may not be performed smoothly. If the activation temperature is too high, it may cause elution of transition metals such as manganese.

Further, the activation step may be performed under pressurized conditions, if necessary. The pressurization can be performed by mounting the battery-cell to a jig and then applying pressure to the battery-cell via the jig. When the activation step is performed under pressurized conditions, it has the advantage that gas generated during the activation step can be easily discharged.

On the other hand, although this is not essential, the activating step may further include an aging step, if necessary. The aging step allows the electrolyte to be uniformly impregnated into the electrode assembly and stabilizes the battery, and may be performed before charging, during charging, and/or after discharging, and may be performed one or more times.

The aging step may be performed at a temperature of, for example, 20°C to 60°C, 20°C to 50°C, and preferably 30°C to 50°C. When aging is performed at the above temperature, electrolyte impregnability and lithium mobility are improved so that activation can be performed more smoothly.

In the lithium secondary battery manufactured through the above activation step, when the total discharge curve area is defined as 100% in a dQ/dV graph which is obtained by differentiating a graph of a voltage V and a battery discharge capacity Q measured while charging the lithium secondary battery to 4.6V at 0.1C and then discharging it to 2.0V at 0.1C, the discharge curve area in a voltage range of 2.0 to 3.5V may be 35% or less, preferably 20% to 35%.

Hereinafter, the present invention will be described in more detail with reference to specific examples.

### Example 1

A positive electrode active material: a conductive material: a PVDF binder were mixed in a weight ratio of 96:1.5:2.5 in N-methylpyrrolidone to prepare a positive electrode slurry. At this time, 0.35Li₂MnO₃·0.65Li[Ni_{0.595}Co_{0.005}Mn_{0.4}]O₂ was used as the positive electrode active material, and carbon black was used as the conductive material. The positive electrode slurry was coated onto an aluminum current collector sheet, dried, and then rolled to produce a positive electrode.

A negative electrode active material: a conductive material: a binder were mixed in a weight ratio of 97:1:2 in water to prepare a negative electrode slurry. At this time, graphite was used as the negative electrode active material, a carbon black was used as a conductive material, and a mixture of SBR (styrene-butadiene) and carboxymethylcellulose (CMC) was used as the binder. The negative electrode slurry was coated onto a copper current collector sheet, dried, and then rolled to manufacture a negative electrode.

A separator was interposed between the positive electrode and the negative electrode produced as above to produce an electrode assembly, and the electrode assembly was inserted into a battery case, and then an electrolyte was injected, thereby producing a battery cell.

The activation process was performed by charging the battery cell to SOC 3 at 0.2C and 45°C in constant current mode (1-1 charging step), charging to SOC 30 at 0.3C in constant current mode (1-2 charging step), charging to 4.6V at 0.5C in constant current mode (second charging step), and discharging to 2.0V at 0.5C in constant current mode, thereby manufacturing a lithium secondary battery.

### Example 2

A lithium secondary battery was manufactured in the same manner as in Example 1, except that in the second charging step, the charging progresses at 1.0C.

### Example 3

A lithium secondary battery was manufactured in the same manner as in Example 1, except that in the second charging step, the charging progresses at 1.5C.

### Comparative Example 1

A lithium secondary battery was manufactured in the same manner as in Example 1, except that in the second charging step, the charging progresses at 0.3C in constant current-constant voltage mode (0.05C CV-cut).

### Experimental Example 1

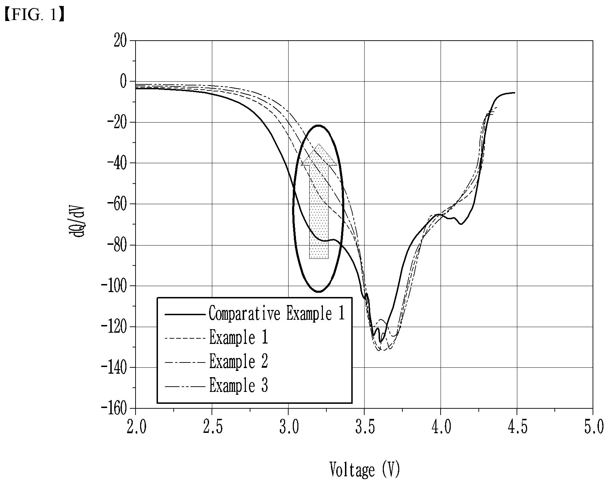

The secondary batteries manufactured in Examples and Comparative Examples were charged to 4.60V in constant current-constant voltage mode (CC-CV mode, CV mode cut-off condition: 0.05C) at 0.1C and 25°C, and discharged to 2.0V at a constant current of 0.1C to measure the voltage-discharge capacity graph. The above voltage capacity graph was differentiated to obtain a dQ/dV graph. The measured dQ/dV graph is shown in FIG. 1. Further, the ratio of the discharge curve area in the 2V to 3.5V region relative to the total discharge curve area (i.e., the discharge curve area in the 2.0 to 4.6V region) is shown in Table 1 below.

**[Table 1]**

| | Percentage (%) of discharge curve area in the 2V to 3.5V region |
|---|---|
| Example 1 | 34.5 |
| Example 2 | 31.5 |
| Example 3 | 28.3 |
| Comparative Example 1 | 42.2 |

As shown in Table 1 and FIG. 1, the lithium secondary batteries of Examples 1 to 3 manufactured by performing a second charge at a rate of 0.5C or more in the activation step showed that the discharge curve area in the 2V to 3.5V region is 35% or less of the total discharge curve area, whereas the lithium secondary battery of Comparative Example 1, in which the second charge was performed at a rate of 0.3C, showed that the discharge curve area in the 2V to 3.5V range is greater than 40%.

### Experimental Example 2

A three-electrode cell (reference electrode: LTO) was manufactured using each positive electrode manufactured in Examples 1 to 3 and Comparative Example 1 as a working electrode, and the three-electrode cell was subjected to EIS (Electrochemical Impedance Spectroscopy) analysis and DCIR (Direct Current Internal Resistance) analysis to measure the positive electrode resistance.

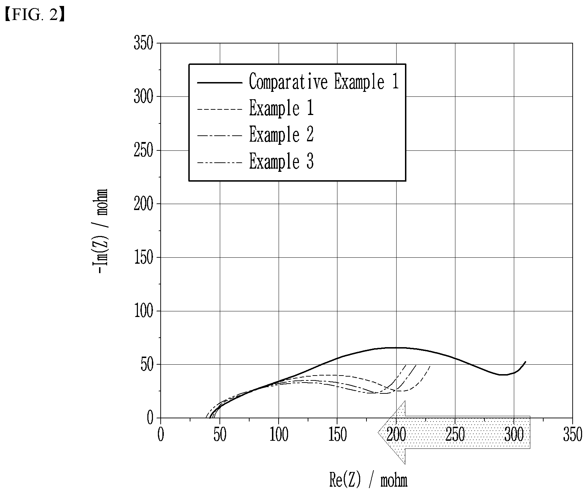

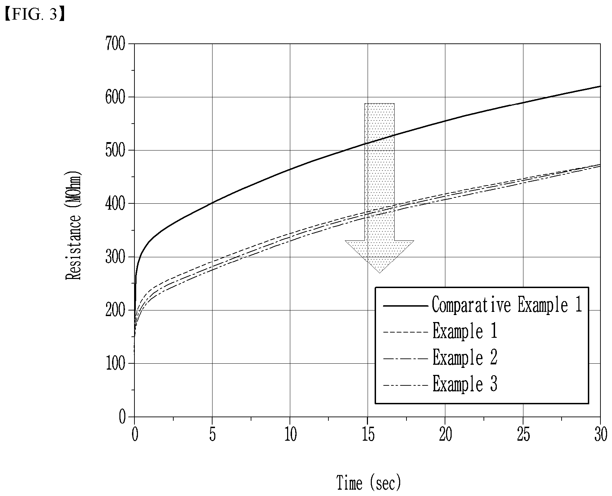

The EIS analysis results were shown in FIG. 2, and the DCIR analysis results were shown in FIG. 3.

It can be confirmed from FIG. 2 that the lithium secondary batteries of Examples 1 to 3 have lower impedance values than the lithium secondary battery of Comparative Example 1, and it can be seen that the frequency (Hz) at which impedance exhibits also appears to increase, and the kinetics of the resistance response are also improved.

Further, it can be seen from FIG. 3 that the lithium secondary batteries of Examples 1 to 3 have lower internal resistance than the lithium secondary battery of Comparative Example 1.

## Claims

1. A lithium secondary battery comprising: a positive electrode, a negative electrode, a separator and an electrolyte, with the positive electrode including lithium-rich manganese-based oxide in which the content of manganese in all metals excluding lithium is greater than 50 mol%, and the ratio of the number of moles of lithium to the number of moles of all metals excluding lithium is greater than 1,
wherein when the total discharge curve area is defined as 100% in a dQ/dV graph which is obtained by differentiating a graph of a voltage V and a battery discharge capacity Q measured while charging the lithium secondary battery to 4.6V at 0.1C and then discharging it to 2.0V at 0.1C, the discharge curve area in a voltage range of 2.0 to 3.5V is 35% or less.

2. The lithium secondary battery according to claim 1, wherein:
the discharge curve area in a voltage range of 2.0 to 3.5 V is 20% to 35%.

3. The lithium secondary battery according to claim 1, wherein:
the lithium-rich manganese-based oxide is represented by the following Chemical Formula 1.
[Chemical Formula 1] LiₐNi_{b}Co_{c}Mn_{d}MₑO₂
wherein, in Chemical Formula 1, 1 < a, 0≤b≤0.5, 0≤c≤0.1, 0.5≤d<1.0, and 0≤e≤0.2, and M is at least one selected from the group consisting of Al, B, Co, W, Mg, V, Ti, Zn, Ga, In, Ru, Nb, Sn, Sr and Zr.

4. The lithium secondary battery according to claim 3, wherein:
in Chemical Formula 1, 1.1≤a≤1.5, 0.1<b≤0.4, 0≤c≤0.05, 0.5≤d≤0.80, and 0≤e≤0.1.

5. A method for manufacturing a lithium secondary battery, the method comprising the steps of:
preparing a battery cell including a positive electrode, a negative electrode and an electrolyte, with the positive electrode including lithium-rich manganese-based oxide in which the content of manganese in all metals excluding lithium is greater than 50 mol%, and the ratio of the number of moles of lithium to the number of moles of all metals excluding lithium is greater than 1; and
charging and discharging the battery cell at least once to activate the battery cell,
wherein the activating step comprises a first charging step of charging the battery cell at a C-rate of less than 0.5C, and a second charging step of charging the battery cell at a C-rate of 0.5C or more.

6. The method for manufacturing a lithium secondary battery according to claim 5, wherein:
the lithium-rich manganese-based oxide is represented by the following Chemical Formula 1.
[Chemical Formula 1] LiₐNi_{b}Co_{c}Mn_{d}MₑO₂
wherein, in Chemical Formula 1, 1 < a, 0≤b≤0.5, 0≤c≤0.1, 0.5≤d<1.0, and 0≤e≤0.2, and M is at least one selected from the group consisting of Al, B, Co, W, Mg, V, Ti, Zn, Ga, In, Ru, Nb, Sn, Sr and Zr.

7. The method for manufacturing a lithium secondary battery according to claim 5, wherein:
the first charging step is performed until the SOC of the battery cell reaches 10 to 40, and the second charging step is performed until the SOC of the battery cell reaches 90 to 150 after the first charging step.

8. The method for manufacturing a lithium secondary battery according to claim 5, wherein:
the first charging step and the second charging step are performed in constant current mode.

9. The method for manufacturing a lithium secondary battery according to claim 5, wherein:
the first charging step is performed in constant current mode , and the second charging step are performed in constant current-constant voltage mode.

10. The method for manufacturing a lithium secondary battery according to claim 5, wherein:
the charge termination voltage in the second charging step is 4.4V or more.

11. The method for manufacturing a lithium secondary battery according to claim 5, wherein:
the charging and discharging are performed in a voltage range of 2.0V to 4.6V.

12. The method for manufacturing a lithium secondary battery according to claim 5, wherein:
when the total discharge curve area is defined as 100% in a dQ/dV graph which is obtained by differentiating a graph of a voltage V and a battery discharge capacity Q measured while charging the lithium secondary battery to 4.6V at 0.1C and then discharging it to 2.0V at 0.1C, the discharge curve area in a voltage range of 2.0 to 3.5V is 35% or less.
